# EUROPÄISCHE PATENTSCHRIFT

(11) **EP 0 447 817 B1**
(45) Veröffentlichungstag und Bekanntmachung des Hinweises auf die Patenterteilung: **02.08.1995**
(21) Anmeldenummer: 91102375.2
(22) Anmeldetag: 20.02.1991
(51) Int. Cl.: C08J 9/24, C08J 9/10, C08L 75/04

(54) **Verfahren zur Herstellung von zellhaltigen Polyurethan-Formkörpern durch Sinterung**
Process for preparing cellular polyurethane articles by sintering
Procédé pour préparer des articles cellulaires en polyuréthane par frittage

(30) Priorität: 03.03.1990 DE 4006648
(43) Veröffentlichungstag der Anmeldung: 25.09.1991
(73) Patentinhaber: BASF Aktiengesellschaft, 67063 Ludwigshafen (DE)
(72) Erfinder: Zeitler, Gerhard, Dr., W-6717 Hessheim (DE); Lehr, Gerhard, W-6721 Schwegenheim (DE)

(56) Entgegenhaltungen:
- EP-A- 0 347 528
- DE-A- 1 494 231
- DE-C- 973 134
- FR-A- 2 512 736
- GB-A- 1 170 261

## Beschreibung

Gegenstand der Erfindung ist ein Verfahren zur Herstellung von zellhaltigen Polyurethan-Formkörpern, vorzugsweise Polyurethan-Flächengebilden, durch Sintern einer Mischung, die enthält
A) mindestens ein pulverförmiges thermoplastisches Polyurethan und
B) mindestens ein bei 23°C festes Treibmittel,
bei erhöhter Temperatur mit Hilfe eines Formwerkzeugs.

Die Herstellung von zellhaltigen Polyurethan-Formkörpern aus mikrozellularen Polyurethan-Elastomeren oder Polyurethan-Schaumstoffen- - im folgenden wird Polyurethan auch abgekürzt PU genannt -, ist bekannt und wird in zahlreichen Patent- und Literaturveröffentlichungen beschrieben.

Zu ihrer Herstellung werden üblicherweise flüssige Treibmittel enthaltende, gießfähige Reaktionsmischungen aus organischen Polyisocyanaten und Verbindungen mit mindestens zwei reaktiven Wasserstoffatomen in gegebenenfalls temperierbare Formwerkzeuge eingefüllt und dort aufschäumen und aushärten gelassen.

Zur Herstellung von PU-Formkörpern mit einer kompakten, im wesentlichen porenfreien Randzone und einem zelligen Kern, sogenannten PU-Integralschaumstoffen, wird mehr dieser schaumfähigen Reaktionsmischung in das Formwerkzeug eingebracht als zur vollständigen drucklosen Ausschäumung des Formwerkzeughohlraums erforderlich ist, d.h. die Verschäumung wird in einem geschlossenen Formwerkzeug unter Verdichtung durchgeführt.

Eine zusammenfassende Übersicht über die Herstellung von PU-Formkörpern und PU-Integralschaumstoffen wurde z.B. publiziert im Kunststoff-Handbuch, Band 7, "Polyurethane", 1. Auflage 1966 und 2. Auflage 1983 (Carl Hanser Verlag, München, Wien) und in der Monographie "Integralschaumstoffe", herausgegeben von Dr. H. Piechota und Dr. H. Röhr, 1975, im gleichen Verlag.

Dünne PU-Schaumstoffplatten oder -folien, z.B. in Dicken von 0,1 bis 20 mm, werden üblicherweise durch Zerschneiden von großen PU-Schaumstoffblöcken oder Verkleben von PU-Schaumstoffabfällen unter Druck in Formwerkzeugen hergestellt.

Im vorgenannten Kunststoff-Handbuch "Polyurethane" (2. Auflage, 1983) beschrieben wird auch die Herstellung von PU-Folien durch Gießen aus flüssigen PU-Formulierungen oder durch Extrusion von thermoplastischen Polyurethanen, im folgenden abgekürzt TPU genannt.

Aus Flüssigformulierungen werden entweder Blöcke gegossen, aus denen Folien gespalten werden, oder die Folien werden im Schleuderverfahren direkt hergestellt. Folien aus TPU in Dicken von 0,03 bis 0,3 mm werden üblicherweise im Blasverfahren, dickere Folien, z.B. bis zu ungefähr 3 mm durch Breitschlitzextrusion hergestellt. In den genannten Publikationen nicht erwähnt wird die Herstellung von PU-Folien aus TPU durch Sintern.

Bekannt ist ferner die Verwendung von dekorativen Kunststoff-Folien im Kraftfahrzeug-Innenraum (R. Pfriender, Kunststoffe, 76 (1986), 10, S. 960ff), wobei die Kunststoff-Formteile mit Folien beschichtet oder die Folien oder Häute mit Schaumstoffen, vorzugsweise PU-Schaumstoff hinterschäumt werden.

Bei Verwendung von PU werden die Oberflächenschichten meist aus Zweikomponenten-PU-Systemen im IMC-Verfahren (in Mould Coating) hergestellt. Nach diesem Verfahren wird das auf etwa 50°C erwärmte Formwerkzeug zuerst mit einem Trennmittel eingesprüht, danach wird der PU-Zweikomponentenlack und anschließend die PU-Trägerschicht in das offene Formwerkzeug eingebracht. Diese Fertigungstechnik zur Herstellung entsprechender Bauteile ist schwierig und wird noch kaum von Verarbeitern beherrscht (Dr. M.Wachsmann, Kunststoffberater, 10/1987, Seiten 27-28).

Nach dem Stand der Technik werden PVC/ABS-Folien üblicherweise nach dem Thermoform-Verfahren verformt und anschließend in einem zweiten Verfahrensschritt hinterschäumt. PVC-Folien können nach dem PVC-Powder-Slush-Verfahren hergestellt werden. Hierzu wird das Formwerkzeug in einem Ofen auf ungefähr 250°C erhitzt, danach das pulverförmige PVC gleichmäßig darauf verteilt und zum Ausgelieren der PVC-Haut das Formwerkzeug erneut im Ofen erwärmt. Nach dem Abkühlen des Formwerkzeugs, z.B. in einem Wasserbad, kann die Folie entnommen und zur Hinterschäumung eingesetzt werden. Die nach dem PVC-Powder-Slush-Verfahren hergestellten Folien sind im Vergleich zu ABS/PVC-, PU-IMC- und TPU-Folien erheblich kostengünstiger. Nachteilig an Formkörpern aus mit PU-Schaumstoffen hinterschäumten PVC-Folien ist die gegenseitige negative Beeinflussung der PVC-Folie und PU-Hinterschäumung. So diffundieren Bestandteile, wie z.B. Katalysatoren, Stabilisatoren u.a. aus dem PU-Schaumstoff in die Dekorfolie und umgekehrt erfolgt eine Weichmachermigration von der PVC-Folie in den PU-Schaumstoff. Durch diese Migrationsprozesse werden die Formkörper, z.B. durch Schwindungen oder Versprödungen, mechanisch geschädigt und verändern durch Verfärbung und Fleckenbildung ihr Aussehen (Kunststofftechnik, VDI-Verlag GmbH, Düsseldorf, 1987, "Kunststoffe als Problemlöser im Automobilbau", Seiten 141ff).

Bekannt ist ferner die Herstellung von porösen Formkörpern durch Verpressen oder Verschmelzen von Mischungen aus thermoplastischen Kunststoffen und Treibmitteln. Nach Angaben der DE-C-973 134 können maßhaltige poröse Formkörper hergestellt werden, indem man zerkleinerte, gelöste Gase enthaltende Kunststoffe in nicht gasdicht schließende Formwerkzeuge einbringt und dort durch Erwärmen auf Temperaturen oberhalb des Erweichungspunktes des Kunststoffs versintert. In der Patentschrift nicht erwähnt wird das Sintern einer Mischung aus TPU und festen Treibmitteln.

Die DE-A-14 94 231 beschreibt ein Verfahren zur Herstellung von geformten Plastschäumen, bei dem man in eine offene oder geschlossene Form ein feinteiliges festes Plastmaterial, das ungefähr 0,1 bis 10 Gew.-% eines feinteiligen festen Blähmittels enthält, einbringt und auf eine Temperatur, die ungefähr 35 bis 150°C über dem Schmelzpunkt des plastischen Materials liegt, erhitzt, um das Blähmittel zu zersetzen und das Plastmaterial ohne Zersetzung zu verschmelzen. Obgleich in der Anmeldebeschreibung zahlreiche Plastmaterialien, u.a. auch Polyurethan, als geeignete polymere Materialien, deren Zersetzungspunkt etwas höher liegt als ihr Schmelzpunkt, genannt werden, wird das Sintern einer Mischung aus TPU und festen Treibmitteln zu zellhaltigen PU-Formkörpern nicht beispielhaft beschrieben.

Die Aufgabe der vorliegenden Erfindung bestand darin, nach einem kostengünstigen Verfahren zellhaltige PU-Formkörper, vorzugsweise Flächengebilde, mit verhältnismäßig geringen Schichtdicken herzustellen. Die PU-Formkörper sollten für bestimmte Anwendungen zweckmäßigerweise mindestens auf einer Seite eine glatte, kompakte, im wesentlichen porenfreie Oberfläche besitzen, so daß sich die Beschichtung der PU-Schaumkörper mit Deck- oder Dekorfolien erübrigt. Sich nachteilig auf die mechanische Eigenschaften der Formkörper auswirkende Wechselwirkungen zwischen Deckfolien und PU-Schaumstoff sollten vermieden oder auf ein Mindestmaß reduziert werden.

Diese Aufgaben konnten in überraschender Weise gelöst werden durch Sinterung von Gemischen aus festen Treibmitteln und TPU.

Gegenstand der Erfindung ist somit ein Verfahren zur Herstellung von zellhaltigen PU-Formkörpern, vorzugsweise PU-Flächengebilden, das dadurch gekennzeichnet ist, daß man eine Mischung, die enthält oder vorzugsweise besteht aus
A) mindestens einem pulverförmigen TPU mit einem Schmelzindex (MFI) bei 190°C und einem Auflagegewicht von 212 N (21,6 kp) von 50 bis 350 und einer Shore-A-Härte von 60 bis 98, das hergestellt wird durch Umsetzung von
   a) organischen Diisocyanaten, mit
   b) im wesentlichen linearen Polyhydroxylverbindungen mit Molekulargewichten von 500 bis 8000 und
   c) Diolen mit Molekulargewichten von 60 bis 400
   in einem Äquivalenzverhältnis von NCO-Gruppen der organischen Diisocyanate (a) zur Summe der Hydroxylgruppen der Komponenten (b) und (c) von 0,8:1,0 bis 1,2:1,0 nach dem Extruder- oder Bandverfahren und
B) mindestens einem bei 23°C festen, zweckmäßigerweise pulverförmigen Treibmittel
bei erhöhter Temperatur mit Hilfe eines Formwerkzeugs sintert.

Die nach dem erfindungsgemäßen Verfahren hergestellten zellhaltigen PU-Formkörper und vorzugsweise PU-Flächengebilde besitzen üblicherweise eine Dicke von 0,1 bis 25 mm, vorzugsweise 0,5 bis 20 mm und insbesondere 2 bis 10 mm und weisen zweckmäßigerweise mindestens auf einer Seite eine glatte, kompakte, im wesentlichen porenfreie Oberfläche auf.

Durch eine geeignete Auswahl der TPU oder deren Abmischungen aus einer Vielzahl von Produkten mit einer unterschiedlichen Härte und einem unterschiedlichen Schmelzindex (MFI) oder Erweichungspunkt, wobei diese Eigenschaften miteinander so in Beziehung stehen, daß niedrigere Erweichungspunkte höhere Schmelzindizes bewirken, z.B. TPU, hergestellt unter Verwendung von Polyesterolen und/oder Polyetherolen und aliphatischen, cycloaliphatischen und/oder aromatischen Diisocyanaten sowie unter Zusatz von z.B. Pigmenten, Stabilisatoren, Antioxidantien oder insbesondere Aluminiumoxid, Kieselgel oder Mischungen davon und anderen für PU üblichen Hilfsmitteln und Zusatzstoffen, können zellhaltige PU-Formkörper, vorzugsweise PU-Flächengebilde, wie Platten oder Folien, in zahlreichen Farbeinstellungen mit den unterschiedlichsten mechanischen Eigenschaften nach dem Sinterverfahren auch in relativ kleinen Stückzahlen kostengünstig hergestellt werden.

Zur Herstellung von PU-Formkörpern, die mindestens auf einer Seite eine glatte, im wesentlichen porenfreie Oberfläche besitzen, werden zweckmäßigerweise TPU-Mischungen aus TPU mit unterschiedlichen Schmelzindizes verwendet, wobei vorteilhafterweise so verfahren wird, daß das TPU oder die TPU-Mischung mit hohem Schmelzindex zunächst zur Bildung der kompakten Oberfläche versintert wird und man anschließend in Gegenwart des festen Treibmittels das TPU oder die TPU-Mischung mit niedrigerem Schmelzindex bzw. höherem Erweichungspunkt verschäumt unter gleichzeitiger Sinterung.
A. Zur Herstellung der zellhaltigen PU-Formkörper nach dem erfindungsgemäßen Verfahren finden vorteilhafterweise ein oder mehrere TPU (A) Verwendung, die einen Schmelzindex (MFI) bei 190°C und einem Auflagegewicht von 212 N (21,6 kp), vorzugsweise von 50 bis 350 und insbesondere von 100 bis 300 und eine Shore-A-Härte vorzugsweise von 60 bis 98 und insbesondere von 80 bis 95 besitzen.
   TPU (A) mit derartigen Schmelzindizes und Härten entsprechen dem Stand der Technik und können hergestellt werden durch Umsetzung von
   a) organischen und/oder modifizierten organischen Diisocyanaten, mit
   b) Polyhydroxylverbindungen, vorzugsweise im wesentlichen linearen Polyhydroxylverbindungen mit Molekulargewichten von 500 bis 8000, insbesondere Polyalkylenglykolpolyadipaten mit 2 bis 6 C-Atomen im Alkylenrest und Molekulargewichten von 500 bis 6000 oder hydroxylgruppenhaltigen Polytetrahydrofuranen mit einem Molekulargewicht von 500 bis 3500 und
   c) Diolen als Kettenverlängerungsmitteln mit Molekulargewichten von 60 bis 400, insbesondere Butandiol-1,4
   in Gegenwart von
   d) Katalysatoren und gegebenenfalls
   e) Hilfsmitteln und/oder
   f) Zusatzstoffen
   bei erhöhten Temperaturen.
   Zu den Aufbaukomponenten (a) bis (d) und gegebenenfalls (e) und/oder (f) ist folgendes auszuführen:
   a) als organische Diisocyanate (a) kommen vorzugsweise aliphatische, cycloaliphatische und aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2, 2'-Dicyclohexylmethan-diisocyanat sowie die entsprechenden Isomerengemische und aromatische Diisocyanate, wie 2,4-Toluylen-diisocyanat, Gemische aus 2,4- und 2,6-Toluylen-diisocyanat, 4,4'-, 2,4'- und 2,2' -Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.% und insbesondere im wesentlichen reines 4,4'-Diphenylmethan-diisocyanat, Hexamethylen-diisocyanat-1,6, Isophoron-diisocyanat und 4,4'- und/oder 2,4'-Dicyclohexylmethan-diisocyanat.
      Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Mengen jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen, ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.
      Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.
   b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt z.B. durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.
      Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 3, vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
      Geeignete Alkylenoxide sind bevorzugt beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.
      Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.
      Sehr gut geeignet sind ferner die hydroxylgruppenhaltigen Polymerisationsprodukte des Tetrahydrofurans, wobei solche mit Molekulargewichten von 500 bis 3500 besonders bevorzugt sind. Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.
      Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- und/oder -diester mit 1 bis 4 Kohlenstoffatomen im Alkoholrest, Dicarbonsäureanhydride oder Dicarbonsäuredichloride zu verwenden. Beispiele für mehrwertige Alkohole sind Alkandiole mit 2 bis 10, vorzugsweise 2 bis 6 Kohlenstoffatomen und/oder Dialkylenetherglykole mit 4 bis 12, vorzugsweise 4 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.
      Geeignet sind ferner Ester der Kohlensäure mit den genannten Alkandiolen oder Dialkylenglykolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.
      Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.
      Die Polyesterole besitzen Molekulargewichte von 500 bis 6000, vorzugsweise von 800 bis 3500.
   c) Als Kettenverlängerungsmittel (c) mit Molekulargewichten von 60 bis 400, vorzugsweise 60 bis 300, kommen vorzugsweise aliphatische Diole oder Dialkylenglykole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-(β-hydroxyethyl)-hydrochinon sowie Polyoxytetramethylenglykole mit Molekulargewichten von 162 bis 378.
      Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.
      Zur Herstellung der TPU werden die im wesentlichen difunktionellen Polyhydroxylverbindungen (b) und Diolen (c) vorteilhafterweise in Molverhältnissen von 1:2 bis 1:6, vorzugsweise von 1:2,5 bis 1:4,5 verwendet, so daß die resultierenden TPU's eine Härte nach Shore A von 60 bis 98, vorzugsweise von 80 bis 95 besitzen.
   d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (b) und Diolen (c) eingesetzt.

   Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe.
   Die Hilfsmittel (e) und/oder Zusatzstoffe (f) können hierzu in die Aufbaukomponenten oder in die Reaktionsmischung zur Herstellung der TPU eingebracht werden. Nach einer anderen Verfahrensvariante können die Hilfsmittel (e) und/oder Zusatzstoffe (f) jedoch mit dem TPU gemischt und anschließend verschmolzen werden. Die zuletzt genannte Methode findet insbesondere Anwendung zum Einbringen von Aluminiumoxid und/oder Kieselgel sowie gegebenenfalls verstärkend wirkenden Füllstoffen.
   Sofern zu den verwendbaren Hilfsmitteln oder Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.
   Zur Herstellung der TPU werden die Aufbaukomponenten (a), (b) und (c) in Gegenwart von Katalysatoren (d) und gegebenenfalls Hilfsmitteln (e) und/ oder Zusatzstoffen (f) in solchen Mengen zur Reaktion gebracht, daß das Äquivalenzverhältnis von NCO-Gruppen der Diisocyanate zur Summe der Hydroxylgruppen der Komponenten (b) und (c) 0,80 bis 1,20:1, vorzugsweise 0,95 bis 1,05:1 und insbesondere ungefähr 1:1 beträgt.
   Die erfindungsgemäß verwendbaren TPU können hergestellt werden nach dem Extruder- oder vorzugsweise Bandverfahren durch batchweises oder kontinuierliches Mischen der Aufbaukomponenten (a) bis (d) sowie gegebenenfalls (e) und/oder (f), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU (A). Gegebenenfalls kann es zweckmäßig sein das erhaltene TPU vor der Weiterverarbeitung bei 80 bis 120°C, vorzugsweise 100 bis 110°C über einen Zeitraum von 1 bis 24 Stunden zu tempern.
   Die TPU werden, wie bereits ausgeführt wurde, bevorzugt nach dem Bandverfahren hergestellt. Hierzu werden die Aufbaukomponenten (a) bis (d) und gegebenenfalls (e) und/oder (f) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 80 bis 180°C. In Abhängigkeit vom Diisocyanatanteil in der Reaktionsmischung wird die Reaktion durch Kühlen oder Heizen so gesteuert, daß mindestens 90 %, vorzugsweise mindestens 98 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.%, vorzugsweise von 0,1 bis 0,5 Gew.% liegen, werden TPU mit einer relativ niedrigen Schmelzviskosität bzw. einem hohen Schmelzindex erhalten.
   Wie bereits dargelegt wurde, hat es sich als vorteilhaft erwiesen, z.B. zur Modifizierung der mechanischen Eigenschaften der zellhaltigen Pu-Formkörper oder deren Lichtbeständigkeit sowie nach Art ihrer Verwendung, anstelle von einem TPU, Mischungen aus zwei oder mehreren TPU in bestimmten, experimentell ermittelbaren Gewichtsmengen zu verwenden.
   So können beispielsweise schwarz eingefärbte zellhaltige Formkörper aus TPU's auf Basis von aromatischen Diisocyanaten, vorzugsweise 4, 4'-Diphenylmethan-diisocyanat, und nahezu beliebigen Polyhydroxylverbindungen (b) und Diolen (c) hergestellt werden. TPU auf Basis aliphatischer Diisocyanate sind zwar lichtstabil, sie kristallisieren aber relativ schwer und sind nach einer thermoplastischen Verarbeitung nur schwierig handhabbar. Durch Abmischen von TPU auf Basis von aromatischen Diisocyanaten mit solchen auf der Grundlage von aliphatischen und/oder cycloaliphatischen Diisocyanaten kann beispielsweise die Lichtbeständigkeit der zellhaltigen Formkörper erheblich verbessert werden, ohne daß die TPU-Mischung bei der Verarbeitung nennenswert zum Verkleben mit dem Formwerkzeug neigt. Nach dieser Methode können aus TPU, hergestellt auf der Grundlage von aromatischen und aliphatischen und/oder cycloaliphatischen Diisocyanaten zellhaltigen Formkörpern mit für andere Farbeinstellungen ausreichender Lichtstabilität erhalten werden, die überraschenderweise im wesentlichen vollständig klebfrei sind.
   In analoger Weise können durch geeignete Wahl von TPU aus unterschiedlichen Polyhydroxylverbindungen, insbesondere solchen aus Polyetherolen oder Polyesterolen, beispielsweise die mechanischen Eigenschaften der zellhaltigen Formkörpern, ihre Oxidations- oder Hydrolysestabilität sowie je nach Wahl des Diisocyanats, wie bereits ausgeführt wurde, die Lichtbeständigkeit gezielt modifiziert werden.
   Zur Herstellung von weichen, elastischen, zellhaltigen PU-Formkörpern finden z.B. vorzugsweise TPU-Mischungen Verwendung, die bezogen auf 100 Gew.-Teile, bestehen aus
   A1) 40 bis 99,5 Gew.-Teilen, vorzugsweise 60 bis 85 Gew.-Teilen eines TPU (A1), hergestellt unter Verwendung von aromatischen Diisocyanaten, vorzugsweise 4,4'-Diphenylmethan-diisocyanat und
   A2) 0,5 bis 60 Gew.-Teilen, vorzugsweise 15 bis 40 Gew.-Teilen eines TPU (A2), hergestellt unter Verwendung von aliphatischen Diisocyanaten, vorzugsweise ausgewählt aus der Gruppe Hexamethylendiisocyanat-1,6,
      Isophoron-diisocyanat und 4,4'-Dicyclohexylmethan-diisocyanat oder Mischungen aus mindestens zwei der genannten Diisocyanate oder
   TPU-Mischungen, die bestehen, bezogen auf 100 Gew.-Teile, aus
   AI) 60 bis 99,5 Gew.-Teilen, vorzugsweise 70 bis 90 Gew.-Teilen eines TPU, hergestellt unter Verwendung mindestens eines Polyoxyalkylen-glykols, z.B. eines Polyoxypropylen-, Polyoxypropylen-polyoxyethylen- oder Polyoxytetramethylen-glykols und
   AII) 0,5 bis 40 Gew.-Teilen, vorzugsweise 10 bis 30 Gew.-Teilen eines TPU, hergestellt unter Verwendung von Polyesterdiolen, vorzugsweise Polyalkylenglykolpolyadipaten mit 2 bis 6 C-Atomen im Alkylenglykolrest
   sowie insbesondere TPU-Mischungen, die bestehen, bezogen auf 100 Gew.-Teile, aus
   A1I) 60 bis 95 Gew.-Teilen, vorzugsweise 70 bis 90 Gew.-Teilen eines TPU, hergestellt unter Verwendung von 4,4'-Diphenylmethan-diisocyanat und eines Polyoxytetramethylen-glykols mit einem Molekulargewicht im Bereich von 500 bis 3500 und
   A2II) 5 bis 40 Gew.-Teilen, vorzugsweise 10 bis 30 Gew.-Teilen eines TPU, hergestellt unter Verwendung von Isophoron-diisocyanat und eines Polyester-diols, vorzugsweise eines Polyalkylenglykol-polyadipats mit einem Molekulargewicht im Bereich von 800 bis 3500

   Die erfindungsgemäß durch Sintern zur Herstellung von zellhaltigen PU-Formkörpern geeigneten TPU werden zweckmäßigerweise mittels geeigneter bekannter Vorrichtungen, z.B. Mühlen, zerkleinert und mit einer durchschnittlichen Korngrößenverteilung von 1 bis 1000 »m, vorzugsweise von 50 bis 800 »m und insbesondere von 100 bis 500 »m gesintert.
   Zur Verbesserung der Rieselfähigkeit dieser TPU-Pulver sowie insbesondere zur Reduzierung der Fließfähigkeit der TPU-Schmelze an senkrechten oder überhitzten Formwerkzeugstellen werden den pulverförmigen TPU zweckmäßigerweise pulverförmiges Aluminiumoxid oder insbesondere pulverförmiges Kieselgel sowie gegebenenfalls Mischungen aus Aluminiumoxid und Kieselgel einverleibt. Bereits durch den Zusatz von 0,05 bis 1 Gew.-Teilen, vorzugsweise von 0,1 bis 0,3 Gew.-Teilen Aluminiumoxid und/oder Kieselgel, bezogen auf 100 Gew.-Teile TPU-Pulver, konnte ein Abfließen der TPU-Schmelze beim Sintern an senkrechten Formwerkzeugoberflächen oder ein Wegfließen an überhitzten Formwerkzeugstellen, verbunden mit der Ausbildung von Dünnstellen oder Löchern, insbesondere in zellhaltigen Flächengebilden mit einer geringen Schichtdicke, vermieden werden. Mit Hilfe dieser Verfahrensvariante können z.B. zellhaltige Flächengebilde mit sehr gleichmäßiger Dickenverteilung hergestellt werden.
   Wie bereits dargelegt wurde können den TPU oder TPU-Pulvern zusätzlich Hilfsmittel und/oder Zusatzstoffe einverleibt werden.
   Genannt seien Füllstoffe, z.B. organische Füllstoffe, wie z.B. Ruß und Melamin und anorganische Füllstoffe, wie z.B. Quarzmehl, Talkum, amorphe Kieselsäure oder Mischungen davon.
   Als Flammschutzmittel haben sich z.B. bewährt: Melamin, Blähgraphit, Polyhalogendiphenyle, Polyhalogendiphenylether, Polyhalogenphthalsäure und ihre Derivate, Polyhalogenoligo- und -polycarbonate, wobei die entsprechenden Bromverbindungen besonders wirksam sind. Als Flammschutzmittel eignen sich ferner Phosphorverbindungen, wie elementarer Phosphor oder organische Phosphorverbindungen. Außerdem enthalten die Flammschutzmittel in der Regel zusätzlich einen Synergisten, z.B. Antimontrioxid.
   Geeignete Oxidationsverzögerer und Wärmestabilisatoren sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.%, bezogen auf das Gewicht des TPU (A) verwendet werden.
   Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.%, bezogen auf das Gewicht des TPU (A), eingesetzt werden.
   Entformungsmittel, die in der Regel ebenfalls in Mengen bis zu 1 Gew.%, bezogen auf das Gewicht des TPU (A) zugesetzt werden, sind Stearinsäuren, Stearylalkohol, Stearinsäureester und -amide sowie die Fettsäureester des Pentaerythrits.
   Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.
B. Zur Herstellung der zellhaltigen PU-Formkörper, vorzugsweise PU-Flächengebilde, finden nach dem erfindungsgemäßen Verfahren bei 23°C feste Treibmittel (B) Verwendung, die zweckmäßigerweise in Form eines feinen Pulvers, beispielsweise mit einer durchschnittlichen Partikelgröße von 1 bis 300 »m, vorzugsweise von 5 bis 100 »m und insbesondere von 10 bis 80 »m eingesetzt werden, wobei die Partikelgröße die Zersetzungstemperatur und -geschwindigkeit beeinflussen. Als feste Treibmittel finden zweckmäßigerweise chemische Verbindungen Verwendung, die sich, innerhalb eines bestimmten, nicht zu großen Temperaturintervalls zersetzen und eine hohe Gasausbeute aufweisen. Hierbei muß die Zersetzungstemperatur der Verarbeitungstemperatur und der thermischen Beanspruchbarkeit des zu verschäumenden TPU angepaßt sein. Diese Bedingungen können experimentell leicht ermittelt werden. Die Zersetzung des Treibmittels darf nicht spontan erfolgen, so daß ein Wärmestau und Verbrennung des TPU vermieden werden. Das feste Treibmittel soll sich vorzugsweise homogen mit dem TPU vermischen lassen und soll Zersetzungsprodukte ergeben, die gesundheitlich unbedenklich sind, die Thermostabilität und mechanischen Eigenschaften der zellhaltigen PU-Formkörper möglichst nicht negativ beeinflussen, nicht ausblühen und keine Verfärbungen hervorrufen.

Feste Treibmittel, die diesen Anforderungen zumindest teilweise oder im wesentlichen vollständig erfüllen, sind beispielsweise Azoverbindungen, wie z.B. Azoisobuttersäurenitril, Azodicarbonamid, vielfach auch Azobisformamid genannt, oder Barium-azodicarboxylat, Hydrazine wie z.B. Diphenylsulfon-3,3'-disulfohydrazid, 4,4'-Oxybis(benzolsulfohydrazid), Trihydrazinotriazin oder Arylbis(sulfohydrazid), Semicarbazide wie z.B. p-Toluylensulfonylsemicarbazid oder 4,4'-Oxybis(benzolsulfonyl-semicarbazid), Triazole wie z.B. 5-Morpholyl-1,2,3,4-thiatriazol und N-Nitroso-Verbindungen wie z.B. N,N'-Dinitrosopentamethylentetramin oder N,N-Dimethyl-N,N'-dinitrosoterephthalamid. Von den genannten Verbindungen haben sich besonders die Azo-Verbindungen und Hydrazine bewährt, so daß vorzugsweise Azoisobuttersäurenitril, Diphenylsulfon-3,3'-disulfohydrazid, 4,4'-Oxybis(benzolsulfohydrazid) und insbesondere Azodicarbonamid Anwendung finden. Die festen Treibmittel können als Einzelverbindungen oder als Mischungen eingesetzt werden.

Die zur Herstellung der zellhaltigen PU-Formkörper erforderliche Treibmittelmenge hängt u.a. ab von der herzustellenden Formkörpergeometrie, der gewünschten Formkörperdichte und -dicke sowie der Gasausbeute des Treibmittels. üblicherweise eingesetzt werden 0,05 bis 18 Gew.-Teile, vorzugsweise 0,1 bis 10 Gew.-Teile und insbesondere 0,5 bis 4 Gew.-Teile eines oder mehrerer, vorzugsweise eines bei 23°C festen, pulverförmigen Treibmittels (B) pro 100 Gew.-Teile mindestens eines pulverförmigen TPU (A).

Zur Herstellung der zellhaltigen, PU-Formkörper werden mindestens ein pulverförmiges TPU (A) und mindestens ein pulverförmiges Treibmittel (B) bei einer Temperatur üblicherweise unter 80°C, vorzugsweise zwischen 0 und 65°C mit an sich bekannten Mischvorrichtungen, wie z.B. Mischern, hergestellt von den Draiswerke GmbH oder der Firma Henschel, homogen gemischt. Die TPU-Treibmittelmischung wird anschließend in einer hinsichtlich der gewünschten Dicke des zellhaltigen Formkörpers ausreichenden Menge auf die Formwerkzeugoberfläche des auf 180°C bis 280°C, vorzugsweise 190 bis 250°C und insbesondere 190 bis 240°C temperierten Formwerkzeug aufgebracht und nach kurzem Kontakt, z.B. nach einer Kontaktzeit von 10 bis 30 Sekunden, vorzugsweise von 16 bis 25 Sekunden, die überschüssige TPU-Treibmittelmischung abgetrennt. Die an der Formwerkzeugoberfläche anhaftende TPU-Treibmittelpulverschicht läßt man mittels der Wärmekapazität des Formwerkzeugs oder durch erneute Erwärmung, z.B. durch Beheizung in einem Ofen oder durch Bestrahlung, sintern unter Aufschäumung, üblicherweise unter Einhaltung eines relativ engen Temperaturintervalls im vorgenannten Temperaturbereich. Zur Erzielung spezieller Eigenschaften, wie z.B. eines zellhaltigen Formkörpers mit einer im wesentlichen porenfreien, glatten Oberfläche kann es zweckmäßig sein, die Oberflächentemperatur des Formwerkzeugs kontinuierlich oder stufenweise zu erhöhen. Diese Verfahrensvariante wird bevorzugt bei Verwendung von Mischungen aus TPU mit unterschiedlichen Schmelzindizes angewandt, wobei z.B. ein TPU mit niedrigem Erweichungspunkt zunächst zu einer kompakten Oberfläche gesintert wird und danach unter Erhöhung der Temperatur in den Zersetzungsbereich des Treibmittels das TPU mit höherem Erweichungsbereich unter Aufschäumung gesintert wird.

Nach der Beendigung des Schäum- und Sinterprozesses, der üblicherweise innerhalb eines Zeitraums von 0,25 bis 5 Minuten, vorzugsweise von 0,5 bis 3 abläuft, läßt man das Formwerkzeug, z.B. an der Luft, in einem gegebenenfalls gekühlten Inertgas- und/oder Luftstrom oder in einem Wasserbad, abkühlen und entformt den gebildeten zellhaltigen Formkörper innerhalb 30 bis 60 Sekunden.

Die durch Sintern hergestellten zellhaltigen Formkörper, die gegebenenfalls mindestens eine glatte, im wesentlichen porenfreie Oberfläche besitzen, können, beispielsweise aus verarbeitungstechnischen oder optischen Gründen, zusätzlich auf mindestens einer Oberfläche mit einer Schutz-, Dekor- und/oder Trägerschicht oder auf mindestens einer Oberfläche mit einer Schutz- oder Dekorschicht und auf der Rückseite mit einer Trägerschicht versehen werden. Als Schutz- und Dekorschichten finden zweckmäßigerweise Folien und als Trägerschicht verstärkend wirkende Schichtstoffe aus Kunststoffmaterialien Verwendung, die mit dem gesinterten TPU keine materialschädigende Wechselwirkung eingehen. Insbesondere bewährt haben sich als Schutzschicht Papier oder Pappe, als Dekorschicht glatte oder strukturierte, eingefärbte oder bedruckte Folien aus TPU und als verstärkend wirkende Trägermaterialien, gegebenenfalls mit Cellulose-, Glas- oder Kohlefasern verstärkte Formteile aus ungesättigten Polyester-, Epoxidharzen, PU-Gießelastomeren oder TPU.

Die erfindungsgemäß hergestellten zellhaltigen PU-Formkörper, vorzugsweise PU-Flächengebilde, sind in Abhängigkeit vom eingesetzten TPU sprödhart, zähhart oder vorzugsweise weich und elastisch und weisen eine Gesamtdichte von 0,2 bis 1,0 g/cm³, vorzugsweise von 0,3 bis 0,5 g/cm³ auf, wobei Füllstoffe enthaltende Formkörper auch höhere Dichten besitzen können. Die Formkörper zeichnen sich durch gute mechanische Eigenschaften, insbesondere eine hohe Reißfestigkeit, einen trockenen, angenehmen Griff und eine nahzu völlige Geruchslosigkeit aus.

Die erfindungsgemäß hergestellten zelligen Formkörper finden Verwendung im Motor- und Innenraum von Verkehrsmitteln, vorzugsweise von Kraftfahrzeugen, z.B. als Säulen- oder Türverkleidungen, Dachhimmel und Armlehnen. Sie eignen sich ferner für die Herstellung von Möbeln, z.B. Polstermöbel, Kunstleder, Innenschuhe, z.B. für Ski- und Wanderstiefel aus TPU, Taschen, z.B. Aktentaschen und Koffern.

### Beispiele 1

### Herstellung eines beigefarbenen, zellhaltigen Flächengebildes

Eine bei Raumtemperatur hergestellte Mischung, die bestand aus
- 78 Gew.-Teilen: eines TPU mit einer Shore-A-Härte von 90 und einem Schmelzindex bei 190°C und einem Auflagegewicht von 212 N von 280, hergestellt durch Umsetzung von 1 Mol Polyoxytetramethylen-glykol mit einem Molekulargewicht von 1000, 4 Molen 4,4'Diphenylmethan-diisocyanat und 3 Molen Butandiol-1,4 nach dem Bandverfahren,
- 18 Gew.-Teilen: eines TPU mit einer Shore-A-Härte von 85 und einem Schmelzindex bei 190°C und einem Auflagegewicht von 212 N von 180, hergestellt durch Umsetzung von 1 Mol Butandiol-1,4-polyadipat mit einem Molekulargewicht von 2000, 3 Molen Isophoron-diisocyanat und 2 Molen Butandiol-1,4 nach dem Bandverfahren,
- 0,75 Gew.-Teile: Titandioxid,
- 3,0 Gew.-Teilen: Sicotangelb®K 2011,
- 0,18 Gew.-Teilen: Eisen(II)oxid,
- 0,3 Gew.-Teilen: Tinuvin®144 als UV-Stabilisator und
- 0,3 Gew.-Teilen: Irganox®1010 als Oxidationsstabilisator

wurde bei 210°C in einem Zweiwellenextruder unter solchen Verfahrensbedingungen zusammengeschmolzen, daß das erhaltene Granulat eine Shore-A-Härte von 88 und einem Schmelzindex bei 190°C und einem Auflagegewicht von 212 N von 310 besaß.

Das erhaltene TPU-Granulat wurde mit Hilfe einer Pralltellermühle auf eine durchschnittliche Korngröpe zwischen 100 und 500 »m vermahlen und 100 Gew.-Teile davon mit 0,15 Gew.-Teilen eines feinteiligen Kieselgels und 2 Gew.-Teilen Azodicarbonamid mit einer durchschnittlichen Teilchengröße von 50 »m bei 23°C homogen gemischt.

Die homogene TPU-Treibmittel-Kieselgel-Mischung wurde in an sich bekannter Weise auf ein auf 230°C temperiertes Formwerkzeug aufgebracht, nach einer Kontaktzeit von 20 Sekunden die überschüssige Pulvermischung abgeschüttet und danach die auf dem Formwerkzeug verbliebene TPU-Treibmittel-Kieselgel-Mischung in 2 Minuten bei 230°C unter Aufschäumen gesintert. Nach dem Abkühlen des Formwerkzeugs in einem Wasserbad wurde das PU-Flächengebilde entformt.

Das erhaltene zellhaltige PU-Flächengebilde war weich und elastisch und wies eine Dicke von 4 mm und eine Dichte von 0,42 g/cm³ auf.

### Beispiel 2

Eine bei Raumtemperatur hergestellte Mischung, bestehend aus
- 72 Gew.-Teilen: eines TPU mit einer Shore-A-Härte von 85 und einem Schmelzindex bei 190°C und einem Auflagegewicht von 212 N von 230, hergestellt durch Umsetzung von 1 Mol Polyoxytetramethylen-glykol mit einem Molekulargewicht von 1000, 3,5 Molen 4,4'-Diphenylmethan-diisocyanat und 2,5 Molen Butandiol-1,4 nach dem Bandverfahren,
- 24 Gew.-Teilen: eines TPU mit einer Shore-A-Härte von 85 und einem Schmelzindex bei 190°C und einem Auflagegewicht von 212 N von 180, hergestellt durch Umsetzung von 1 Mol Butandiol-1,4-polyadipat mit einem Molekulargewicht von 2000, 3 Molen Isophoron-diisocyanat und 2 Molen Butandiol-1,4 und dem Bandverfahren,
- 0,65 Gew.-Teilen: Ultramarinblau,
- 0,24 Gew.-Teilen: Lichtgelb,
- 0,12 Gew.-Teilen: Heliogengrün®,
- 0,20 Gew.-Teilen: Ruß,
- 0,40 Gew.-Teilen: Titandioxid,
- 0,79 Gew.-Teilen: Kreide (Microcalcilin®,)
- 0,8 Gew.-Teilen: Irganox®1010 als Oxidationsstabilisator und
- 0,8 Gew.-Teilen: Tinuvin®328 als UV-Stabilisator

wurde bei 212°C in einem Zweiwellenextruder vom Typ ZSK zusammengeschmolzen. Das erhaltene Granulat hatte eine Shore-A-Härte von 85 und einen Schmelzindex bei 190°C und einem Auflagegewicht von 212 N von 220.

Das Pulver daraus wurde auf einer Stiftmühle unter Zugabe von flüssigem Stickstoff hergestellt und hatte eine durchschnittliche Korngröße von 100 bis 500 »m.

Zur Herstellung des zellhaltigen Flächengebildes wurden 100 Gew.-Teile des erhaltenen TPU-Pulvers mit 0,1 Gew.-Teilen eines feinteiligen Kieselgels, und 2,5 Gew.-Teilen Azodicarbonamid mit einer durchschnittlichen Teilchengröße von 50 »m bei 23°C homogen vermischt.

Die TPU-Treibmittel-Kieselgel-Mischung wurde auf eine auf 200°C temperierte Stahlplatte aufgebracht, nach einer Kontaktzeit von 30 Sekunden die überschüssige Pulvermischung abgeschüttet, danach die auf der Stahlplatte verbliebene TPU-Treibmittel-Kieselgel-Mischung zunächst eine Minute bei 210°C und anschließend 2 Minuten bei 230°C gesintert. Nach dem Abkühlen des Formwerkzeugs in einem Luftstrom auf eine Temperatur von ungefähr 50°C wurde das PU-Flächengebilde entformt.

Man erhielt ein weiches, elastisches, zellhaltiges PU-Flächengebilde mit einer Dicke von 3 mm und einer Gesamtdichte von 0,38 g/cm³, das an der dem Formwerkzeug zugewandten Seite eine glatte, kompakte Oberfläche aufwies.

### Beispiel 3

Eine bei Raumtemperatur hergestellte Mischung, die bestand aus
- 98 Gew.-Teilen: eines TPU mit einer Shore-A-Härte von 90 und einem Schmelzindex bei 190°C und einem Auflagegewicht von 212 N von 280, hergestellt durch Umsetzung von 1 Mol Polyoxytetramethylen-glykol mit einem Molekulargewicht von 1000, 4 Molen 4,4'-Diphenylmethan-diisocyanat und 3 Molen Butandiol-1,4 nach dem Bandverfahren,
- 1,0 Gew.-Teilen: Spezial-Schwarz 4,
- 0,1 Gew.-Teilen: Eisen(II)oxid (Bayerferrox),
- 0,5 Gew.-Teilen: Irganox®1010 und
- 0,4 Gew.-Teilen: Tinuvin®328

wurde bei 220°C in einem Zweiwellenextruder zusammengeschmolzen. Das erhaltene Granulat hatte eine Shore-A-Härte von 91 und einen Schmelzindex bei 190°C und einem Auflagegewicht von 212 N von 245.

Aus dem Granulat wurde in der in Beispiel 1 beschriebenen Weise ein Pulver mit einer durchschnittlichen Korngröße zwischen 100 und 500 »m hergestellt.

100 Gew.-Teile des TPU-Pulvers wurden mit 1,5 Gew.-Teilen Azodicarbonamid mit einer durchschnittlichen Teilchengröße von 50 »m bei 23°C homogen gemischt.

Die erhaltene Mischung wurde auf ein auf 240°C temperiertes, plattenförmiges Werkzeug aufgebracht, nach einer Kontaktzeit von 20 Sekunden das überschüssige Pulver abgeschüttet und die auf dem Formwerkzeug verbliebene Mischung bei 240°C 2 Minuten lang gesintert. Nach dem Abkühlen des Formwerkzeugs in einem Wasserbad wurde entformt.

Man erhielt einen zellhaltigen Formkörper mit einer im wesentlichen gleichförmigen Dicke von 5 mm und einer Gesamtdichte von 0,45 g/cm³, der an der dem Formwerkzeug zugewandten Seite eine verdichtete Oberfläche besaß.

### Beispiel 4

- 98 Gew.-Teile: eines TPU mit einer Shore-A-Härte von 85 und einem Schmelzindex bei 190°C und einem Auflagegewicht von 212 N von 210, hergestellt durch Umsetzung von 1 Mol Butandioladipat mit einem Molekulargewicht von 2000, 3,5 Molen 4,4'-Diphenylmethan-diisocyanat und 2,5 Molen Butandiol-1,4 nach dem Bandverfahren,
- 0,4 Gew.-Teile: Titandioxid,
- 1,3 Gew.-Teile: Sicotangelb® K 2011 und
- 0,3 Gew.-Teile: Irganox® 1010 als Oxidationsstabilisator

wurden bei 200°C in einem Zweiwellenextruder zusammengeschmolzen und anschließend granuliert. Das erhaltene Granulat, das einen Schmelzindex bei 190°C und einem Auflagegewicht von 212 N von 200 besaß, wurde mit Hilfe einer Stiftsmühle auf eine Korngrößenverteilung von 100 bis 500 »m vermahlen.

100 Gew.-Teile des erhaltenen Pulvers wurden danach mit 0,3 Gew.-Teilen eines feinteiligen Kieselgels und 3 Gew.-Teilen Azodicarbonamid bei 40°C in einem Mischer homogen gemischt.

Diese TPU-Treibmittelmischung wurde in ein auf 220°C temperiertes Formwerkzeug eingebracht, dessen Oberfläche zuvor mit einer vorgefertigten Folie beschichtet war. Nach einer Kontaktzeit von 30 Sekunden wurde die überschüssige TPU-Treibmittelmischung abgeschüttet. Die verbleibende Pulverschicht schmolz unter gleichzeitiger Verschäumung durch die Wärmekapazität des mit der Folie beschichteten Formwerkzeugs.

Nach 2,5 Minuten wurde das Formwerkzeug und das mit der Folie versehene Flächengebilde mit Wasser auf Raumtemperatur abgekühlt.

Das erhaltene Flächengebilde, besaß unter der Folie eine weiche, elastische, zellige Schicht mit einer Dicke von 4,5 mm und einer Dichte von 0,38 g/cm³.

## Patentansprüche

1. Verfahren zur Herstellung von zellhaltigen Polyurethan-Formkörpern, vorzugsweise Polyurethan-Flächengebilden, dadurch gekennzeichnet, daß man eine Mischung, die enthält
A) mindestens ein pulverförmiges, thermoplastisches Polyurethan mit einem Schmelzindex (MFI) bei 190°C und einem Auflagegewicht von 212 N (21,6 kp) von 50 bis 350 und einer Shore-A-Härte von 60 bis 98, das hergestellt wird durch Umsetzung von
a) organischen Diisocyanaten, mit
b) im wesentlichen linearen Polyhydroxylverbindungen mit Molekulargewichten von 500 bis 8000 und
c) Diolen mit Molekulargewichten von 60 bis 400
in einem Äquivalenzverhältnis von NCO-Gruppen der organischen Diisocyanate (a) zur Summe der Hydroxylgruppen der Komponenten (b) und (c) von 0,8:1,0 bis 1,2:1,0 nach dem Extruder- oder Bandverfahren und
B) mindestens ein bei 23°C festes Treibmittel,
bei erhöhter Temperatur mit Hilfe eines Formwerkzeugs sintert.

2. Verfahren nach Anspruch 1, dadurch gekennzeichnet, daß der Polyurethan-Formkörper, vorzugsweise das Polyurethan-Flächengebilde einstufig hergestellt wird und mindestens auf einer Seite eine glatte, im wesentlichen porenfreie Oberfläche besitzt.

3. Verfahren nach Anspruch 1 oder 2, dadurch gekennzeichnet, daß das Polyurethan-Flächengebilde eine Dicke von 0,1 bis 25 mm aufweist.

4. Verfahren nach einem der Ansprüche 1 bis 3, dadurch gekennzeichnet, daß die thermoplastischen Polyurethane eine durchschnittliche Teilchengröße von 1 bis 1000 »m besitzen.

5. Verfahren nach einem der Ansprüche 1 bis 4, dadurch gekennzeichnet, daß die festen Treibmittel aus pulverförmigem Azoisobuttersäurenitril, Azodicarbonamid, Diphenylsulfon-3,3'-disulfohydrazid oder 4,4'-Oxybis(benzolsulfohydrazid) bestehen.

6. Verfahren nach einem der Ansprüche 1 bis 5, dadurch gekennzeichnet, daß die Mischungen pro 100 Gew.-Teile des pulverförmigen thermoplastischen Polyurethans (A) 0,05 bis 18 Gew.-Teile mindestens eines bei 23°C festen, pulverförmigen Treibmittels (B) enthalten.

7. Verfahren nach einem der Ansprüche 1 bis 6, dadurch gekennzeichnet, daß das Sintern in Gegenwart von 0,05 bis 1 Gew.-Teilen Aluminiumoxid und/oder Kieselgel pro 100 Gew.-Teilen des thermoplastischen Polyurethans durchgeführt wird.

8. Verfahren nach einem der Ansprüche 1 bis 7, dadurch gekennzeichnet, daß die thermoplastischen Polyurethane (A) hergestellt werden durch Umsetzung von
a) aromatischen und/oder cycloaliphatischen Diisocyanaten mit
b) Polyalkylenglykolpolyadipaten mit 2 bis 6 C-Atomen im Alkylenrest und Molekulargewichten von 500 bis 6000 oder hydroxylgruppenhaltigem Polytetrahydrofuran mit einem Molekulargewicht von 500 bis 3500, und
c) 1,4-Butandiol
in einem Äquivalenzverhältnis von NCO-Gruppen der organischen Diisocyanate (a) zur Summe der Hydroxylgruppen der Komponenten (b) und (c) von 0,8:1,0 bis 1,2:1,0 nach dem Extruder- oder Bandverfahren.

9. Verfahren nach einem der Ansprüche 1 bis 8, dadurch gekennzeichnet, daß das Formwerkzeug eine Temperatur im Bereich von 180 bis 280°C aufweist.

## Claims

1. A process for the production of cellular polyurethane moldings, preferably polyurethane sheet-like materials, which comprises sintering a mixture which contains
A) one or more pulverulent, thermoplastic polyurethanes having a melt flow index (MFI) of from 50 to 350 at 190°C and a load of 212 N (21.6 kp), and a Shore A hardness of from 60 to 98, which is or are prepared by reacting
a) an organic diisocyanate with
b) an essentially linear polyhydroxyl compound having a molecular weight of from 500 to 8000 and
c) a diol having a molecular weight of from 60 to 400
in a ratio between the number of equivalents of NCO groups in the organic diisocyanate (a) and the sum of hydroxyl groups in components (b) and (c) of from 0.8:1.0 to 1.2:1.0, by the extruder or belt process, and
B) one or more blowing agents which are solid at 23°C,
at elevated temperature using a mold.

2. A process as claimed in claim 1, wherein the polyurethane molding, preferably the polyurethane sheetlike material, is produced in one step and has, on one or more sides, a smooth, essentially pore-free surface.

3. A process as claimed in claim 1 or 2, wherein the polyurethane sheet-like material has a thickness of from 0.1 to 25 mm.

4. A process as claimed in claim 1 or 2 or 3, wherein the thermoplastic polyurethane has a mean particle size of from 1 to 1000 »m.

5. A process as claimed in claim 1 or 2 or 3 or 4, wherein the solid blowing agent comprises pulverulent azobisisobutyronitrile, azodicarbonamide, diphenyl sulfone 3,3'-disulfohydrazide or 4,4'-oxybis(benzenesulfohydrazide).

6. A process as claimed in claim 1 or 2 or 3 or 4 or 5, wherein the mixture contains from 0.05 to 18 parts by weight of one or more pulverulent blowing agents (B) which are solid at 23°C per 100 parts by weight of the pulverulent thermoplastic polyurethane (A).

7. A process as claimed in claim 1 or 2 or 3 or 4 or 5 or 6, wherein the sintering is carried out in the presence of from 0.05 to 1 part by weight of aluminum oxide and/or silica gel per 100 parts by weight of the thermoplastic polyurethane.

8. A process as claimed in claim 1 or 2 or 3 or 4 or 5 or 6 or 7, wherein the thermoplastic polyurethane (A) is prepared by reacting
a) an aromatic and/or cycloaliphatic diisocyanate with
b) a polyalkylene glycol polyadipate having from 2 to 6 carbon atoms in the alkylene moiety and a molecular weight of from 500 to 6000, or a hydroxyl-containing polytetrahydrofuran having a molecular weight of from 500 to 3500, and
c) 1,4-butanediol,
in a ratio between the number of equivalents of NCO groups of the organic diisocyanate (a) to the sum of the hydroxyl groups of components (b) and (c) of from 0.8:1.0 to 1.2:1.0, by the extruder or belt process.

9. A process as claimed in claim 1 or 2 or 3 or 4 or 5 or 6 or 7 or 8, wherein the mold is at from 180 to 280°C.

## Revendications

1. Procédé pour la fabrication d'objets moulés alvéolaires en polyuréthannes, de préférence des articles planiformes, caractérisé en ce que l'on fritte, à haute température à l'aide d'un outil de moulage, un mélange contenant
A) au moins un polyuréthanne thermoplastique en poudre ayant un indice de fusion (MFI) de 50 à 350 à 190°C sous une charge de 212 N (21,6 kg) et une dureté Shore-A de 60 à 98, qui est préparé par réaction de
a) des diisocyanates organiques avec
b) des composés polyhydroxylés essentiellement linéaires de poids moléculaire 500 à 8000 et
c) des diols de poids moléculaire 60 à 400,
à un rapport de 0,8 : 1,0 à 1,2 : 1,0 entre les équivalents de groupes NCO des diisocyanates organiques a) et la somme des groupes hydroxy des composants b) et c), par le procédé à l'extrudeuse ou à la bande et
B) au moins un gonflant solide à 23°C.

2. Procédé selon la revendication 1, caractérisé en ce que le corps moulé en polyuréthanne, de préférence un article planiforme, est fabriqué en un seul stade opératoire et a une surface lisse, essentiellement exempte de pores, au moins sur une face.

3. Procédé selon la revendication 1 ou 2, caractérisé en ce que les articles planiformes en polyuréthannes ont une épaisseur de 0,1 à 25 mm.

4. Procédé selon l'une des revendications 1 à 3, caractérisé en ce que les polyuréthannes thermoplastiques ont une dimension de particule moyenne de 1 à 1000 »m.

5. Procédé selon l'une des revendications 1 à 4, caractérisé en ce que les gonflants solides consistent en azobutyronitrile, azodicarboxamide, diphénylsulfone-3,3' -disulfohydrazide ou 4,4' -oxy-bis-(benzènesulfohydrazide) à l'état pulvérulent.

6. Procédé selon l'une des revendications 1 à 5, caractérisé en ce que, pour 100 parties en poids du polyuréthanne thermoplastique en poudre A), les mélanges contiennent de 0,05 à 18 parties en poids d'au moins un gonflant solide à 23°C et à l'état pulvérulent B).

7. Procédé selon l'une des revendications 1 à 6, caractérisé en ce que le frittage est réalisé en présence de 0,05 à 1 partie en poids d'alumine et/ou de gel de silice, pour 100 parties en poids du polyuréthanne thermoplastique.

8. Procédé selon l'une des revendications 1 à 7, caractérisé en ce que les polyuréthannes thermoplastiques A) sont préparés par réaction
a) de diisocyanates aromatiques et/ou cycloaliphatiques, avec
b) de polyadipates de polyalkylène-glycols contenant 2 à 6 atomes de carbone dans le groupe alkylène et ayant des poids moléculaires de 500 à 6000, ou un polytétrahydrofuranne contenant des groupes hydroxy, de poids moléculaire 500 à 3500 et
c) du 1,4-butane-diol,
à un rapport de 0,8 : 1,0 à 1,2 : 1,0 entre les équivalents de groupes NCO des diisocyanates organiques a) et la somme des groupes hydroxy des composants b) et c), par la technique à l'extrudeuse ou à la bande.

9. Procédé selon l'une des revendications 1 à 8, caractérisé en ce que l'outil de moulage est à une température dans l'intervalle de 180 à 280°C
